Europäisches Patentamt

European Patent Office

Office européen des brevets

(11) Veröffentlichungsnummer: **0 348 536**

A1

## EUROPÄISCHE PATENTANMELDUNG

(21) Anmeldenummer: 88110151.3

(22) Anmeldetag: 25.06.88

(51) Int. Cl.⁴: **B27C 9/04** , **B27B 31/00**

(43) Veröffentlichungstag der Anmeldung:
03.01.90 Patentblatt 90/01

(84) Benannte Vertragsstaaten:
AT BE CH DE ES FR GB GR IT LI LU NL SE

(71) Anmelder: Baljer & Zembrod GmbH & Co.
Max-Planck-Strasse 8
D-7963 Altshausen(DE)

(72) Erfinder: Emele, Walter
Oberschwarzach
D-7954 Bad Wurzach(DE)

(74) Vertreter: Patentanwälte Dipl.-Ing. E. Eisele
Dr.-Ing. H. Otten
Seestrasse 42
D-7980 Ravensburg(DE)

(54) **Abbundanlage zum Bearbeiten von Kantholz.**

(57) Eine Abbundanlage zum Bearbeiten von Kantholz (5), insbesondere Bauholz, mit mehreren Bearbeitungsmaschinen (32, 36) wird dadurch vereinfacht und hinsichtlich Unfallsicherheit und Erfassung der Holzabfälle verbessert, daß die Bearbeitungsmaschinen (32, 36 u. a.) in einer über der Förderbahn (3, 4) angeordneten Bearbeitungsstation zusammengefaßt sind. Die Maschinen sitzen, um Klappachsen (33, 34) verschwenkbar, an Vertikalschlitten (27, 28), die an einem Horizontalschlitten (21) gelagert sind. Diese Tragschlittenkombination insgesamt ist um eine Hochachse (10) drehbar an einem quer zur Förderbahn (3, 4) verfahrbaren Oberschlitten (7) gelagert. Das Kantholz (5) wird während der Bearbeitung festgeklemmt zwischen einer horizontalen Klemmschiene (45) an der Tragschlittenkombination und einem Drehtisch (2), der auf einem am Oberschlitten (7) hängenden Tragrahmen (18) gelagert ist und sich gleichläufig mit der Tragschlittenkombination um die Hochachse (10) dreht. Eine horizontale Klemmvorrichtung (51) an einem Zustellförderer (3) bringt den Balken (5) in Bearbeitungsposition.

FIG.1

## Abbundanlage zum Bearbeiten von Kantholz

Die Erfindung betrifft eine Abbundanlage zum Bearbeiten von Kantholz, insbesondere Bauholz, mit mehreren Bearbeitungsmaschinen, die mit vorzugsweise rotierenden Werkzeugen bestückt und zur Ausführung der insbesondere numerisch gesteuerten Bearbeitungsvorgänge beweglich gelagert sind, und mit einer Einrichtung zum Zustellen der Kanthölzer in die Bearbeitungsposition und zum Festhalten der Kanthölzer in der Bearbeitungsposition während der Bearbeitung, wobei die Zustellbewegung in Längsrichtung der Kanthölzer über eine horizontale Förderbahn verläuft. Derartige Anlagen dienen insbesondere in Zimmereibetrieben typischerweise zum Bearbeiten von Dachgebälk, d. h. von Sparren, Bindern, Pfetten, Giebelhölzern usw. Die wichtigsten Bearbeitungsmaschinen sind eine allseitig verstellbare Kappsäge, sowie Fräser, Kettenstemmer und Bohrer. Je nach der Maschinenausstattung im einzelnen können an einem Balken die notwendigen Bearbeitungsvorgänge wie Stemmen, Kervenfräsen, Schlitzen, Bohren, Überplatten, Zuschneiden usw. vollautomatisch durchgeführt werden.

Bekannte Anlagen dieser Art, beispielsweise nach dem Prospekt der Firma Hans Hundegger, 8941 Hawangen/Allgäu, oder wie in der DE-PS 34 20 080 erwähnt, haben für jedes Werkzeug und somit für jede Bearbeitungsart ein eigenes Bearbeitungsaggregat, meist mit mehreren Schlitten, Schwenkvorrichtungen u. dgl., um das betreffende Werkzeug an der gewünschten Stelle des Kantholzes zum Einsatz zu bringen und den Werkzeugvorschub zu ermöglichen. Die einzelnen Bearbeitungsaggregate sind in einer Reihe entlang einer Förderbahn angeordnet, auf der das Kantholz in die betreffende Bearbeitungsposition gebracht und festgehalten wird.

Diese dezentralisierte Bauweise mit nebeneinander stehenden Bearbeitungsaggregaten, die alle ihre einzelnen Schlittenführungen und sonstigen Bewegungsvorrichtungen haben, ist ziemlich aufwendig und erfordert verhältnismäßig große Zustellbewegungen, d. h. Transportbewegungen von einem Bearbeitungsaggregat zum anderen. Die an weit auseinanderliegenden Stellen angeordneten schnell rotierenden Werkzeuge sind angesichts der Notwendigkeit, sie universell zu bewegen, meist nicht gekapselt oder auf andere Weise wirksam gegen unbedachten Zugriff gesichert. Es besteht daher ein hohes Unfallrisiko. Schließlich ist das Freihalten der Maschinenteile von Sägemehl und Spänen sowie das Erfassen dieser Holzabfälle ein großes Problem, und zwar aus zwei Gründen. Zum einen ist die Erfassung schon deshalb erschwert, weil entsprechend der Anordnung der Werkzeuge auch die Späne an verschiedenen Stellen anfallen. Zum anderen lagern sich die Holzabfälle auf den Schlittenführungen und sonstigen beweglichen Teilen ab, weil die Bearbeitungsaggregate meist als auf dem Boden stehende Gestelle ausgeführt sind, die Schlittenführungen also meist unter dem Werkzeug liegen. Beispielsweise wird als Säge eine übliche Untertischkappsäge verwendet.

Der Erfindung liegt die Aufgabe zugrunde, den Material-bzw. Bauteilaufwand der bisher bekannten Abbundanlagen zu verringern, eine solche Anlage unfallsicher zu machen und die Voraussetzungen für eine einfache und wirkungsvolle Erfassung und Entsorgung der bei der Bearbeitung entstehenden Holzabfälle zu schaffen.

Diese Aufgabe wird ausgehend von einer Abbundanlage der einleitend bezeichneten Art erfindungsgemäß dadurch gelöst, daß die Bearbeitungsmaschinen in einer über der Förderbahn angeordneten Bearbeitungsstation zusammengefaßt sind. Dadurch kann eine größere Anzahl von bislang mehrfach erforderlichen Schlitten oder anderen Bewegungsvorrichtungen eingespart werden. Auch der Raumbedarf wird kleiner. Und die Anzahl der Zustellbewegungen bzw. die dabei vom Kantholz zurückgelegten Wegstrecken verringert sich. Die verbleibenden Schlitten und Bewegungsvorrichtungen für die Bearbeitungswerkzeuge befinden sich nicht mehr unter, sondern über diesen, so daß die Holzabfälle sich nicht in den Konstruktionsteilen festsetzen, sondern nach unten fallen. Da dies auf engstem Raum geschieht können sie leicht eingesaugt und entfernt werden. Außerdem ist es möglich, die nunmehr konzentrierte Bearbeitungsstation insgesamt mit einer Umhüllung zu versehen, welche jeden gefahrbringenden Zugriff sicher verhindert und außerdem zur besseren Erfassung der Holzabfälle beiträgt.

Eine bevorzugte konstruktive Realisierung des erfinderischen Grundgedankens besteht darin, daß die Bearbeitungsmaschinen, worunter im wesentlichen nur die Motoren und/oder Lagergehäuse der Werkzeuge verstanden werden, einzeln oder zu mehreren an horizontal und vertikal verfahrbaren Tragschlitten angeordnet sind und die gesamte, sowohl Vertikal- als auch Horizontalführungen umfassende Tragschlittenkombination um eine vertikale Hochachse drehbar an einem quer zur Förderbahn verfahrbaren Oberschlitten gelagert ist. Dadurch ist, abgesehen von der räumlichen Zusammenfassung der Bearbeitungsmaschinen, das übliche Konstruktionsprinzip der bekannten, sich von unten nach oben aufbauenden Bearbeitungsaggregate auf den Kopf gestellt. Das tragende Gerüst für die Bearbeitungsstation befindet sich ganz oben, die einzelnen, nach unten anschließenden tragenden Elemente sind aneinander aufgehängt und die eigentlichen Bearbeitungsmaschinen befinden sich unten. Der Oberschlitten und die Drehbarkeit der Bearbeitungsstation um die Hochachse erlaubt es, die Werkzeuge oben und an den Seiten des Kantholzes in beliebigen Richtungen anzusetzen.

Um das Werkstück während der Bearbeitung festzuhalten, wird vorgeschlagen, daß auf einem mit dem Oberschlitten fest verbundenen Traggerüst ein als Werkstückauflage dienender Drehtisch um die Hochachse drehbar gelagert ist, der mit der Drehbewegung der Tragschlittenkombination gleichlaufend angetrieben ist, und daß an der Tragschlittenkombination in einer von Werkzeugbewegungen freien Zone ein vertikal bewegliches Klemmorgan angeordnet ist. Dieser Drehtisch hat die gleiche Höhe wie die zum Transport der Werkstücke verwendete Förderbahn. In der Draufsicht bewegt er sich deckungsgleich mit der Tragschlittenkombination, macht also nicht nur deren Drehbewegungen, sondern auch deren Längsbewegungen beim Verfahren des Oberschlittens mit. Somit ist es möglich in dem Drehtisch Aussparungen mit derart gewählten Umrissen anzubringen, daß die Werkzeuge bei ihren Bewegungen bezüglich der Tragschlittenkombination Bewegungsfreiheit haben, auch soweit sie dabei nach unten in die Förderebene eintauchen. Dagegen brauchen bei der Bemessung dieser Aussparungen im Drehtisch diejenigen Werkzeugbewegungen nicht berücksichtigt zu werden, die durch die Dreh- und Längsbewegungen der Tragschlittenkombination insgesamt verursacht werden, weil sich, wie gesagt, der Drehtisch entsprechend mitbewegt. Dabei ergeben sich so kleine Aussparungen, daß genügend Auflagefläche für das Kantholz verbleibt und vor allem das Klemmorgan stets eine gleich große Gegenfläche am Drehtisch vorfindet, um das Werkstück festzuklemmen.

Ein weiterer Freiheitsgrad für die Bearbeitungswerkzeuge wird vorteilhafterweise dadurch geschaffen, daß die Bearbeitungsmaschinen bezüglich ihrer Tragschlitten um parallel zu der Horizontalführung der Tragschlittenkombination verlaufende Klappachsen schwenkbar gelagert sind. Dadurch können z. B Kappschnitte oder Querfräsungen in beliebigen Winkeln zur Förderebene ausgeführt werden. Bestimmte Bearbeitungsmaschinen wird man, wie an sich bekannt, auf eigenen Vorschubschlitten anordnen, wobei dann zweckmäßigerweise die zugehörigen Schlittenführungen ebenfalls um Klappachsen, welche die erwähnte Ausrichtung haben, verschwenkbar gelagert sind.

Drehbarkeit um eine vertikale Hochachse wird vorteilhafterweise dadurch herbeigeführt, daß der Oberschlitten an seiner Unterseite einen Drehkranz mit entsprechender Achsorientierung aufweist, an dessen drehbarem Unterteil ein Basisgestell der Tragschlittenkombination befestigt ist. An diesem Basisgestell sind vorzugsweise zwei Tragschlitten gegenständig, d. h. an zwei einander gegenüberliegenden Seiten, angeordnet. Das Basisgestell kann eine rechteckige, sich vertikal erstreckende Platten- oder Rahmenstruktur aufweisen und insbesondere als Rechteckrahmen ausgebildet sein, wobei in dem Rechteckrahmen ein an beiden Seiten zugänglicher Horizontalschlitten geführt ist. An diesem wiederum sind die Tragschlitten vertikal geführt.

Eine zweckmäßige und bevorzugte Grundausstattung an Bearbeitungsmaschinen, welche für die meisten Zwecke ausreicht, besteht darin, daß an dem einen Tragschlitten eine Kappsäge und an dem anderen Tragschlitten eine Universalfräse, ein Kettenstemmer und eine Bohrmaschine angeordnet sind. Diese Bearbeitungsmaschinen lassen sich vorzugsweise zwischen einer Stellung mit horizontaler Achse, bei welcher die Werkzeuge dem Basisgestell benachbart sind, und einer Stellung mit vertikaler Achse und unten stehendem Werkzeug um die jeweilige horizontale Klappachse schwenken.

Ausgehend von einem Basisgestell in Gestalt eines Rechteckrahmens wird als zweckmäßige Vorrichtung zum Festhalten des Werkstücks während der Bearbeitung vorgeschlagen, daß unterhalb des Rechteckrahmens und parallel zu dessen unterem horizontalem Rahmenholm eine Klemmschiene angeordnet ist, die parallel zu sich selbst in vertikaler Richtung antreibbar am Rechteckrahmen geführt ist. Die Form einer langgestreckten Klemmschiene ist deshalb gewählt, um auch bei unterschiedlichen Stellungen des Oberschlittens und unterschiedlichen Winkelstellungen des Drehtisches und der Tragschlittenkombination das Werkstück sicher fassen zu können. Zum Antrieb der Klemmschiene können an den vertikalen Rahmenholmen angeordnete gleichlaufende Arbeitskolben vorgesehen sein.

Zum Zustellen des Kantholzes in die jeweilige Bearbeitungsposition wird ein Band- oder Kettenförderer mit einem umlaufenden endlosen Strang vorgeschlagen, an dem eine das Kantholz an einem Endabschnitt fassende Klemmvorrichtung befestigt ist, wobei das obere Trum des Stranges als Auflage für das Kantholz dient. Am einfachsten weist die Klemmvorrichtung zwei in horizontaler Richtung gegeneinander bewegliche Klemmbacken auf, wobei der Klemmbacken, welcher den größten Hub auszuführen hat, zweckmäßigerweise an zwei Parallelhebeln geführt wird. Eine Vorrichtung zur Messung und Steuerung der Längsposition der Klemmvorrichtung und damit des eingeklemmten Kantholzes kann entlang des Band- oder Kettenförderers angeordnet oder von diesem spielfrei angetrieben sein.

Zur unfallsicheren Kapselung der Bearbeitungsstation insgesamt kann ein geeignetes Gittergeflecht oder, insbesondere für die Sichtseite, ein durchsichtiger Scheibenwerkstoff verwendet werden. Dort wo die Werkstücke in die Bearbeitungsstation eingeführt werden bzw. aus dieser herausstehen, kann der Schutzweck durch einen Kettenvorhang o. dgl. erfüllt werden.

Ein Ausführungsbeispiel der Erfindung wird nachfolgend anhand der schematischen Zeichnung erläutert. Im einzelnen zeigt

Fig. 1 die Vorderansicht einer Abbundanlage,

Fig. 2 die Draufsicht der Anlage nach Fig. 1, teilweise im Schnitt II-II,

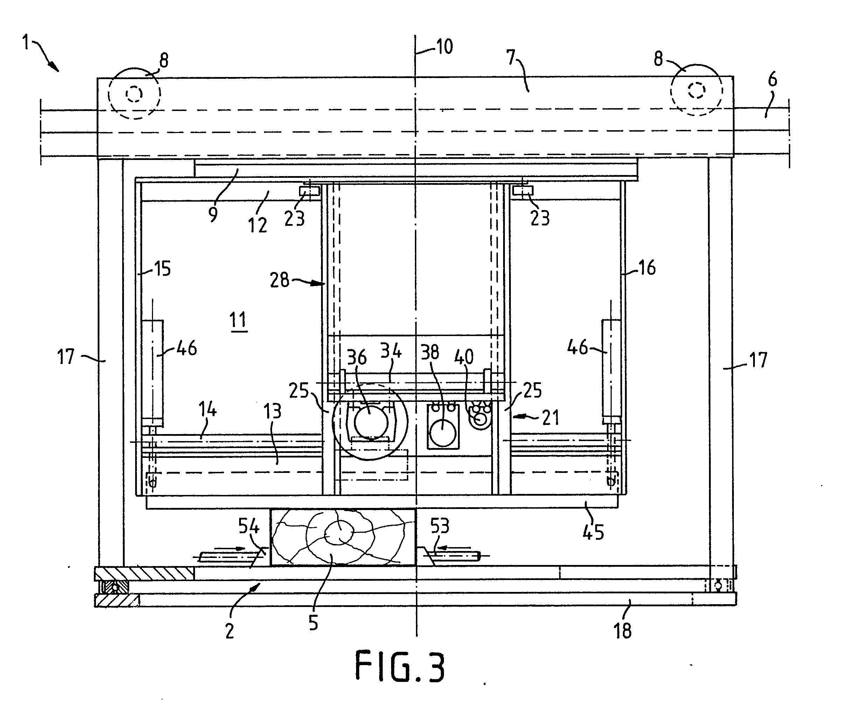

Fig. 3 die rechte Seitenansicht der Anlage nach Fig. 1 in Richtung Pfeil III,

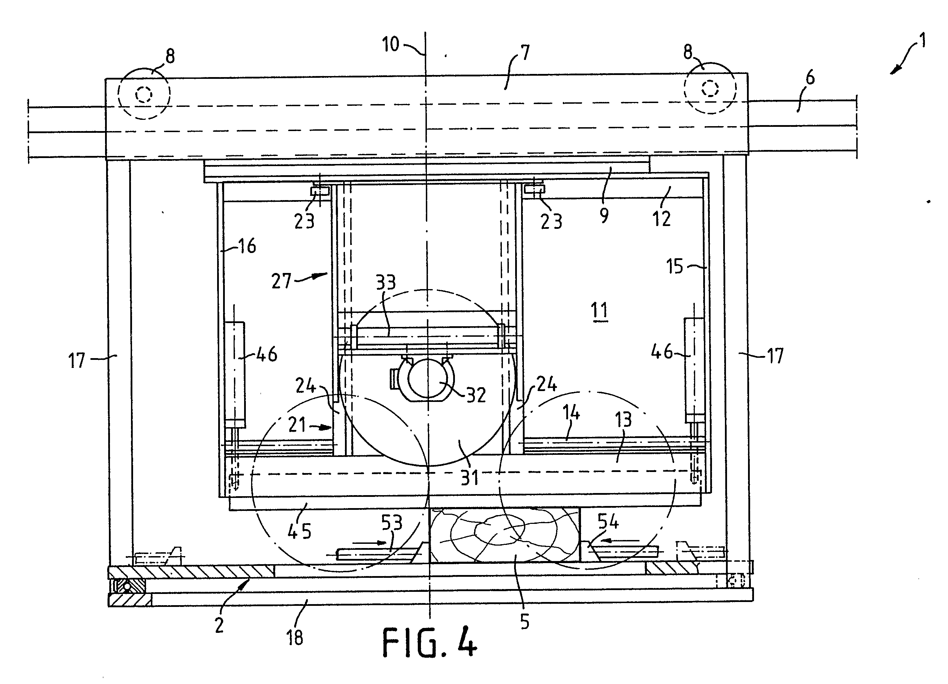

Fig. 4 die linke Seitenansicht der Anlage nach Fig. 1 in Richtung Pfeil IV,

Fig. 5 eine Teilansicht der Bearbeitungsstation mit Kettenstemmer,

Fig. 6 eine Teilansicht der Bearbeitungsstation mit Bohrmaschine und

Fig. 7 eine verkleinerte Draufsicht des Drehtisches.

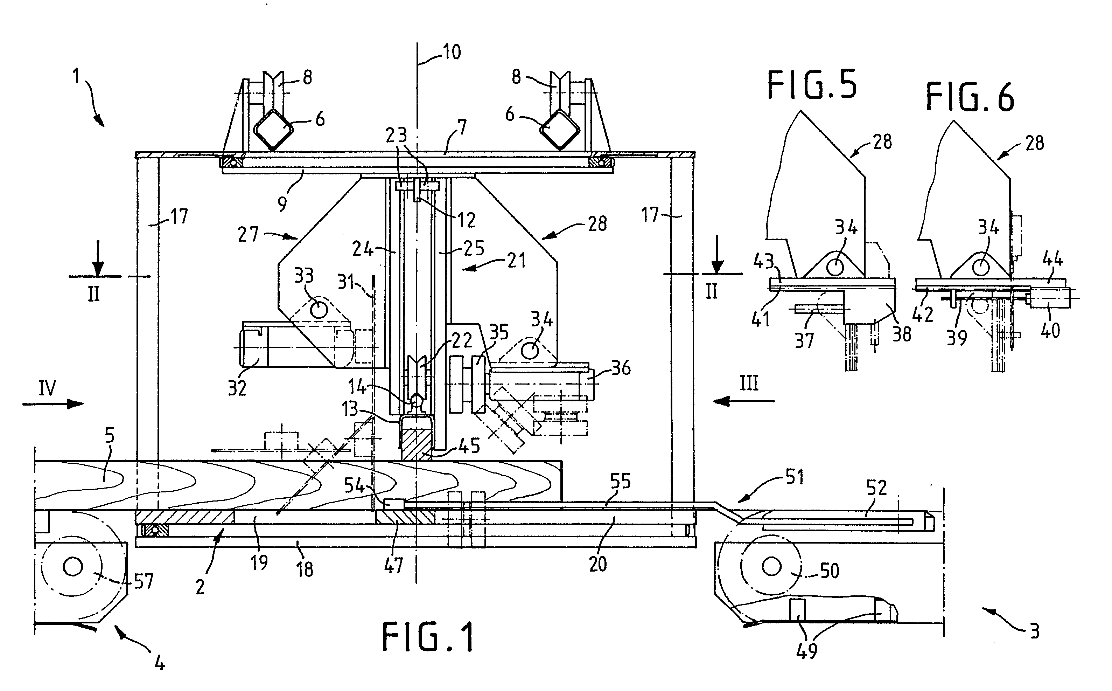

Gemäß Fig. 1 gliedert sich die Anlage in eine Bearbeitungsstation 1 mit Drehtisch 2, einen Zustellförderer 3 und einen Hilfsförderer 4. Die drei zuletzt genannten Anlagenteile bilden eine durchgehende Förderbahn. Ein darauf liegender Holzbalken 5 als Werkstück ist in einer Bearbeitungsposition dargestellt.

Die Bearbeitungsstation 1 hängt insgesamt an zwei Laufschienen 6, die am Gebäude oder einem nicht dargestellten Traggestell befestigt sind und sich horizontal quer über die Förderbahn erstrecken. Ein Oberwagen 7 mit vier Rollen 8 ist auf den Laufschienen 6 verfahrbar. An der Unterseite dieses plattenförmigen Oberwagens, ist eine Drehscheibe 9 um eine Hochachse 10 drehbar gelagert. An ihrer Unterseite ist ein Basisrahmen 11 befestigt, bestehend aus einem horizontalen Oberholm mit vertikal stehendem Flachprofil, einem Unterholm 13 mit aufgesetzter Laufschiene 14 und zwei Stirnblechen 15 und 16, welche die Holme miteinander verbinden.

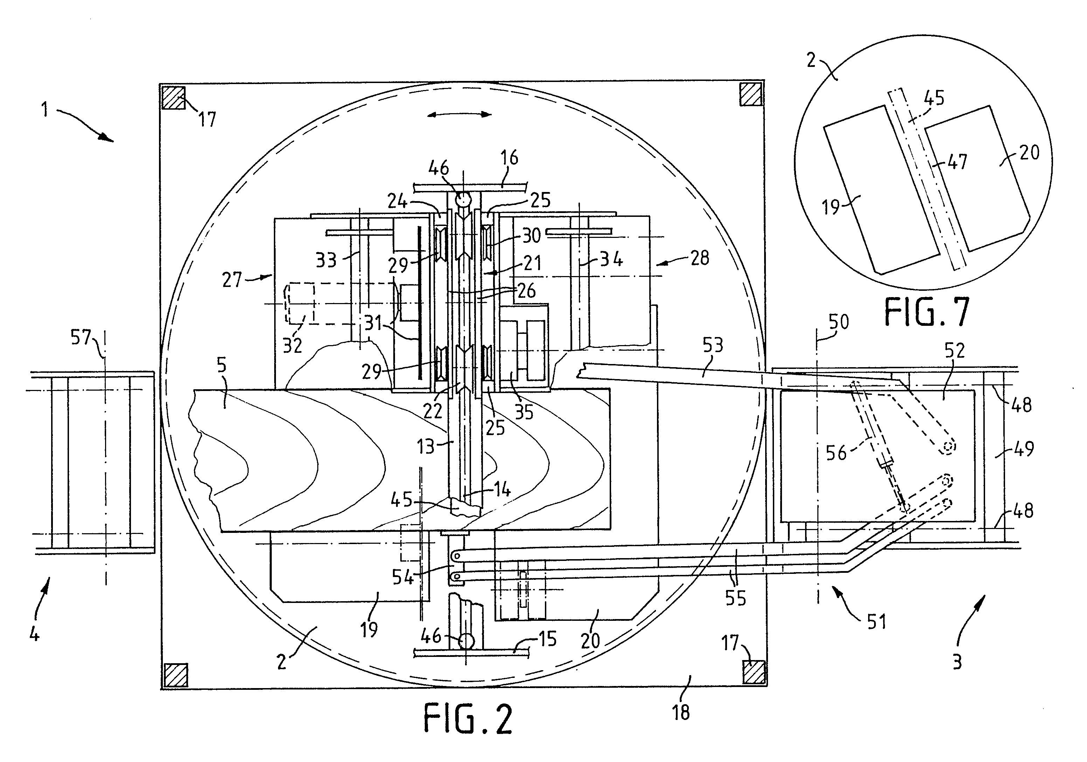

Ferner ist an dem Oberwagen 7 mit Hilfe von vier vertikalen Streben 17 ein Tragrahmen 18 angebracht, auf dem der als runde Scheibe ausgebildete Drehtisch 2 ebenfalls um die Hochachse 10 drehbar gelagert ist. Der Drehtisch 2, in Fig. 2 in einer anderen Winkelposition für sich dargestellt, hat zwei fensterartige Aussparungen 19 und 20, um den Bearbeitungswerkzeugen, wie unten noch näher ausgeführt wird, das Eintauchen in die Tischebene zu ermöglichen. Nicht dargestellte Antriebsmittel stellen eine drehwinkelgetreue Kopplung der Drehbewegungen des Drehtisches 2 und der Drehscheibe 9 sicher.

In dem Basisrahmen 11 ist ein Horizontalschlit

ten 21 geführt. Es handelt sich um ein Rahmengestell, das mit zwei Rollen 22 auf der Laufschiene 14 aufsteht und mit je zwei vertikalachsigen kleineren Rollen 23 den Oberholm 12 zwischen sich aufnimmt. Wesentliche Rahmenbestandteile des Horizontalschlittens 21 sind zwei vertikal verlaufende parallele Führungsschienen 24 an der linken Seite gemäß Fig. 1 und zwei entsprechende Führungsschienen 25 an der rechten Seite. Diese vertikalen Führungsschienen sind durch Horizontalstreben 26 (Fig. 2) und durch weitere nicht dargestellt Querstreben miteinander verbunden. In den Führungsschienen 24 ist ein Vertikalschlitten 27 und in den Führungsschienen 25 ein Vertikalschlitten 28 verfahrbar. Von den je vier Rollen 29 bzw. 30 dieser gegenständigen Vertikalschlitten sind jeweils die beiden oberen in Fig. 2 angedeutet. Die beiden Vertikalschlitten 27 und 28 sind im übrigen als kastenförmige, unten offene Gehäuse ausgebildet.

In dem linken Vertikalschlitten 27 ist eine Kappsäge mit einem Sägeblatt 31 und einem Motor-und Lagergehäuse 32 um eine horizontale Klappachse 33 zwischen einer vertikalen Sägeblattstellung und einer horizontalen Sägeblattstellung nach unten schwenkbar gelagert. Die Klappachse 33 verläuft über dem Motor- und Lagergehäuse 32, und zwar rechtwinklig zur Drehachse. In dem Vertikalschlitten 28 sind dagegen drei verschiedene Bearbeitungsmaschinen angeordnet und um eine horizontale Klappachse 34 schwenkbar. Diese Maschinen sind ein Fräser mit Fräskopf 35 und Motorund Lagergehäuse 36, ein Kettenstemmer mit Arbeitskopf 37 und Motor- und Lagergehäuse 38 sowie eine Bohrmaschine mit Bohrer 39 und Motorund Lagergehäuse 40. Der Kettenfräser und die Bohrmaschine sind je auf einem Vorschubschlitten 41 bzw. 42 aufgebaut, welche an in Vorschubrichtung verlaufenden Schlittenführungen 43 bzw. 44 hängen. Die Schwenklager befinden sich jeweils oberhalb des Motor- und Lagergehäuses 36 bzw. der Schlittenführungen 43 und 44 und die gemeinsame horizontale Klappachse 34 verläuft im rechten Winkel zur Werkzeugdrehachse bzw. zur Längserstreckung der Schlittenführungen. Alle drei Maschinen lassen sich wie die Kappsäge aus ihrer horizontalen Stellung heraus um 90° nach unten verschwenken.

Wie aus den Fig. 2 und 7 ersichtlich, reichen die Aussparungen 19 und 20 hin, um sowohl der Kappsäge als auch dem Fräser in jeder Stellung des Horizontalschlittens 21 und der Vertikalschlitten 27 und 28 den erforderlichen Freiraum zu schaffen. Um den Kettenstemmer-Arbeitskopf 37 und den Bohrer 39 zum Einsatz zu bringen, muß der Oberwagen 7 zum Balken 5 hin verfahren werden. Dadurch erhalten auch diese Werkzeuge nach unten freien Raum.

Um das zu bearbeitende Werkstück, im Bei

spiel den Balken 5, gegen die Anstellkräfte der Bearbeitungswerkzeuge mit ausreichender Kraft festzuhalten, ist eine Klemmschiene 45 vorgesehen, die in dem nach unten geöffneten U-förmigen Querschnittsprofil des Unterholms 13 vertikal auf und ab beweglich geführt ist. Zwei vertikal stehende Hubzylinder 46, die an den Stirnblechen 15 und 16 des Basisrahmens 11 angebracht sind bringen die erforderliche Preßkraft auf. Als Gegenfläche dient der Steg 47 zwischen den beiden Aussparungen 19 und 20 des Drehtisches 2. In Fig. 7 ist die Klemmschiene 45 strichpunktiert eingezeichnet.

Der Zustellförderer 3, der die Werkstücke in Bearbeitungsposition bringt, ist als Kettenförderer ausgebildet mit zwei nur durch strichpunktierte Linien angedeuteten Ketten 48, die durch in Abständen angeordnete Querleisten 49 miteinander verbunden sind. Diese beiden parallelen endlosen Ketten 48 werden über zwei Kettenräder 50 umgelenkt, von denen nur das der Bearbeitungsstation 1 näher liegende dargestellt ist. An der Doppelkette ist eine Klemmvorrichtung 51 angebracht. Sie besteht aus einem flachen Anlenkgehäuse 52, einem Backenhebel 53 und einem zweiten parallel zu sich selbst beweglichen Backen 54, der mittels zweier Parallelhebel 55 ebenso wie der Backenhebel 53 an dem Anlenkgehäuse 52 gelagert ist. Der an dem Backenhebel 53 fest angebrachte Klemmbacken, der in Fig. 2 nicht gezeigt ist, liegt dem Backen 54 gegenüber unter dem Basisrahmen 11. Die Lagerachsen der Hebel verlaufen jeweils vertikal, so daß der Balken 5 seitlich zwischen den Klemmbacken festgehalten wird. Die Klemmkraft wird von einem Hubzylinder 56 aufgebracht. Die Klemmvorrichtung 51 kann sich auf dem oberen Trum, somit also über die gesamte Länge des Zustellförderers 3 hin und her bewegen.

Schließlich ist zum Antransport der Balken 5 und zum Abtransport nach der Bearbeitung ein Hilfsförderer 4 vorgesehen, welcher entsprechend dem Zustellförderer 3 als Kettenförderer ausgebildet ist. Eines der Kettenräder ist mit 57 bezeichnet. Während der Bearbeitung liegt der Balken 5 meist auch auf dem Hilfsförderer 4 auf.

Die beschriebene Anlage arbeitet beispielsweise wie folgt. Ein Balken 5 wird auf dem Hilfsförderer 4 von links herbeigebracht und stößt mit seinem vorauslaufenden Ende auf einen, beispielsweise am Drehtisch 2 von unten einschwenkbaren Anschlag. Die Bearbeitungsstation ist, ausgehend von der Zeichnung um 180° um die Hochachse gedreht. Nun wird die Klemmschiene 45 nach unten gefahren und der Balken 5 dadurch auf den Drehtisch 2 gedrückt. Mit der Kappsäge wird nun ein rechtwinkliger Sauberkeitsschnitt durchgeführt. Danach wird das so vorbereitete Balkenende von der Klemmvorrichtung 51 aufgenommen, wobei die Längenmeßvorrichtung in Nullposition gebracht wird. Von da ab läuft der Zustellförderer 3 nacheinander in die einzelnen Bearbeitungspositionen, wobei es auch vorkommen kann, daß der Balken hin und wieder eine kurze Distanz zurückgefördert werden muß.

Ein Kappschnitt wird dadurch ausgeführt, daß der Vertikalschlitten 27 nach unten und der Horizontalschlitten 21 nach vorn oder hinten fährt. Soll ein schräger Vertikalschnitt durchgeführt werden, so wird zuvor die Drehscheibe 9 und der Drehtisch 2 bezüglich des Oberwagens 7 gedreht. Im Falle eines bezüglich der Horizontalebene geneigten Schnittes wird die Kappsäge zusätzlich um die Klappachse 33 geschwenkt. Ist eine entgegengesetzte Neigungsrichtung gewünscht, so kann auch zuvor die Drehscheibe 9 um 180° herum geschwenkt und der Oberwagen soweit erforderlich verfahren werden.

Entsprechende Bearbeitungsbewegungen sind auch mit den anderen Maschinen möglich. Der Fräser 35, 36, der nach der entgegengesetzten Seite ausschwenkt, wird durch Niederfahren des Vertikalschlittens 28 in Position gebracht und führt ebenfalls durch Verfahren des Horizontalschlittens 21 seine Bearbeitungsbewegung aus. So sind Rechteckfräsungen, Kervenfräsungen, Überblattungen und ähnliche Schnittformen möglich. Grundsätzlich lassen sich die Werkzeuge oben und an beiden Seiten des Balkens ansetzen. Durch die zusätzlichen Vorschubschlitten 41 und 42 der übrigen Werkzeugmaschinen lassen sich Stemmlöcher und Bohrungen an allen drei genannten Flächen in jeder beliebigen Richtung einbringen. Die Richtung der Vorschubbewegung wird beim Stemmen und Bohren durch Drehen der Bearbeitungsstation um die Hochachse 10 und durch Schwenken der betreffenden Schlittenführung eingestellt. Danach kann die Bohrung durch Verfahren des Horizontalschlittens 21 und/oder des Vertikalschlittens 28 an der betreffenden Oberfläche lokalisiert werden. Sodann wird die Bohrung oder Stemmung durch Bewegung des betreffenden Vorschubschlittens in seiner Schlittenführung ausgeführt.

Wenn schließlich nach Beendigung der Bearbeitung der ganze Balken 5 die Bearbeitungsstation durchlaufen hat, wird er nach Öffnen der Klemmvorrichtung 51 von dem Zustellförderer 3 auf einen nicht gezeigen Querförderer übernommen.

Sollte es ausnahmsweise einmal erforderlich sein, das vorauslaufende Balkenende statt mit einem einfachen Kappschnitt, wie beschrieben, mit anderen Werkzeugen zu bearbeiten, so bringt zu diesem Zweck die Klemmvorrichtung 51 den Balken in die betreffende Bearbeitungsposition und fährt, nachdem der Balken mittels der Klemmschiene 45 festgehalten ist, außer Reichweite des betreffenden Bearbeitungswerkzeuges. Anschließend wird das Balkenende dann wieder von der Klemmvorrichtung 51 aufgenommen.

Der Antrieb und die Stellungsmessung aller beschriebenen beweglichen Teile erfolgt mit im Maschinenbau an sich bekannten Mess- und Antriebsmitteln, insbesondere numerischen Steuereinrichtungen, so daß nach entsprechender Vorprogrammierung die Bearbeitungsvorgänge ohne Unterbrechung vollautomatisch ablaufen können.

1 Bearbeitungsstation
2 Drehtisch
3 Zustellförderer
4 Hilfsförderer
5 Balken
6 Laufschienen
7 Oberwagen
8 Rolle
9 Drehscheibe
10 Hochachse
11 Basisrahmen
12 Oberholm
13 Unterholm
14 Laufschiene
15 Stirnblech
16 Stirnblech
17 Strebe
18 Tragrahmen
19 Aussparung
20 Aussparung
21 Horizontalschlitten
22 Rolle
23 Rolle
24 Führungsschiene
25 Führungsschiene
26 Horizontalstrebe
27 Vertikalschlitten
28 Vertikalschlitten
29 Rolle
30 Rolle
31 Sägeblatt
32 Motor- und Lagergehäuse
33 Klappachse
34 Klappachse
35 Fräskopf
36 Motor- und Lagergehäuse
37 Kettenstemmer-Arbeitskopf
38 Motor- und Lagergehäuss
39 Bohrer
40 Motor- und Lagergehäuse
41 Vorschubschlitten
42 Vorschubschlitten
43 Schlittenführung
44 Schlittenführung
45 Klemmschiene
46 Hubzylinder
47 Steg
48 Kette
49 Querleiste
50 Kettenrad

51 Klemmvorrichtung
52 Anlenkgehäuse
53 Backenhebel
54 Backen
55 Parallelhebel
56 Hubzylinder
57 Kettenrad

## Ansprüche

1. Abbundanlage zum Bearbeiten von Kantholz, insbesondere Bauholz, mit mehreren Bearbeitungsmaschinen, die mit vorzugsweise rotierenden Werkzeugen bestückt und zur Ausführung der insbesondere numerisch gesteuerten Bearbeitungsvorgänge beweglich gelagert sind, und mit einer Einrichtung zum Zustellen der Kanthölzer in die Bearbeitungsposition und zum Festhalten der Kanthölzer in der Bearbeitungsposition während der Bearbeitung, wobei die Zustellbewegung in Längsrichtung der Kanthölzer über eine horizontale Förderbahn verläuft, dadurch gekennzeichnet, daß die Bearbeitungsmaschinen in einer über der Förderbahn angeordneten Bearbeitungsstation zusammengefaßt sind.

2. Abbundanlage nach Anspruch 1, dadurch gekennzeichnet, daß die Bearbeitungsmaschinen (31, 35, 37, 39) einzeln oder zu mehreren an horizontal und vertikal verfahrbaren Tragschlitten (27, 28) angeordnet sind und die gesamte, sowohl Vertikal- als auch Horizontalführungen umfassende Tragschlittenkombination (11, 21, 27, 28) um eine vertikale Hochachse (10) drehbar an einem horizontal und quer zum Förderbahn verfahrbaren Oberschlitten (7) gelagert ist.

3. Abbundanlage nach Anspruch 2, dadurch gekennzeichnet, daß auf einem mit dem Oberschlitten (7) fest verbundenen Traggerüst (18) ein als Werkstückauflage dienender Drehtisch (2) um die Hochachse (10) drehbar gelagert ist, der mit der Drehbewegung der Tragschlittenkombination gleichlaufend angetrieben ist, und daß an der Tragschlittenkombination in einer von Werkzeugbewegungen freien Zone ein vertikal bewegliches Klemmorgan (45) angeordnet ist.

4. Abbundanlage nach Anspruch 2, dadurch gekennzeichnet, daß die Bearbeitungsmaschinen (31, 35, 37, 39) bezüglich ihrer Tragschlitten (27, 28) um parallel zu der Horizontalführung (11) der Tragschlittenkombination verlaufende Klappachsen (33, 34) schwenkbar gelagert sind.

5. Abbundanlage nach Anspruch 4, dadurch gekennzeichnet, daß einzelne Bearbeitungsmaschinen (37, 38 und 39, 40) auf eigenen Vorschubschlitten (41, 42) angeordnet sind und die zugehörigen Schlittenführungen (43, 44) um Klappachsen (34) verschwenkbar gelagert sind.

6. Abbundanlage nach Anspruch 2, dadurch gekennzeichnet, daß der Oberschlitten (7) an seiner Unterseite einen Drehkranz aufweist, an dessen um die Hochachse (10) drehbarem Unterteil (9) ein Basisgestell (11) der Tragschlittenkombination befestigt ist.

7. Abbundanlage nach Anspruch 6, dadurch gekennzeichnet, daß an zwei einander gegenüberliegenden Seiten des Basisgestells je wenigstens ein Tragschlitten (27, 28) angeordnet ist.

8. Abbundanlage nach Anspruch 6, dadurch gekennzeichnet, daß das Basisgestell (11) eine rechteckige, sich vertikal erstreckende Platten- oder Rahmenstruktur (12, 13, 15, 16) aufweist.

9. Abbundanlage nach Anspruch 8, dadurch gekennzeichnet, daß in einem als Rechteckrahmen ausgebildeten Basisgestell (11) ein an beiden Seiten zugänglicher Horizontalschlitten (21) geführt ist.

10. Abbundanlage nach Anspruch 9, dadurch gekennzeichnet, daß an dem Horizontalschlitten (21) zu beiden Seiten je ein Vertikalschlitten (27, 28) geführt ist.

11. Abbundanlage nach Anspruch 10, dadurch gekennzeichnet, daß an dem einen Vertikalschlitten (27) eine Kappsäge und an dem anderen Vertikalschlitten (28) eine Universalfräse (35, 36), ein Kettenstemmer (37, 38) und eine Bohrmaschine (39, 40) angeordnet sind und daß diese Bearbeitungsmaschinen zwischen einer Stellung mit horizontaler Achse und zum Basisgestell (11) hin weisendem Werkzeug und einer Stellung mit vertikaler Achse und nach unten weisendem Werkzeug um die jeweilige Klappachse (33, 34) schwenkbar sind.

12. Abbundanlage nach Anspruch 9, dadurch gekennzeichnet, daß unterhalb des Rechteckrahmens und parallel zu dessen unterem horizontalem Rahmenholm (13) eine Klemmschiene (45) angeordnet ist, die parallel zu sich selbst in vertikaler Richtung antreibbar am Rechteckrahmen geführt ist.

13. Abbundanlage nach Anspruch 12, dadurch gekennzeichnet, daß zum Antrieb der Klemmschiene (45) an den vertikalen Rahmenholmen (15, 16) angeordnete gleichlaufende Arbeitskolben (46) vorgesehen sind.

14. Abbundanlage nach Anspruch 1, dadurch gekennzeichnet, daß ein Band- oder Kettenförderer (3) mit einem umlaufenden endlosen Strang (48) vorgesehen ist, an dem eine das Kantholz an einem Endabschnitt fassende Klemmvorrichtung (51) befestigt ist, und daß das obere Trum des Stranges als Auflage für das Kantholz (5) dient.

15. Abbundanlage nach Anspruch 14, dadurch gekennzeichnet, daß die Klemmvorrichtung (51) zwei in horizontaler Richtung gegeneinander bewegliche Klemmbacken (53, 54) aufweist.

16. Abbundanlage nach Anspruch 14, dadurch gekennzeichnet, daß eine entlang des Band- oder Kettenförderers (3) angeordnete oder von diesem spielfrei angetriebene Vorrichtung zur Messung und Steuerung der Längsposition der Klemmvorrichtung (51) vorgesehen ist.

17. Abbundanlage nach Anspruch 1, dadurch gekennzeichnet, daß die Bearbeitungsstation (6 bis 47) insgesamt gekapselt ist.

FIG.5

FIG.6

FIG.1

FIG.2

FIG.7

EP 0 348 536 A1

FIG.3

EP 0 348 536 A1

FIG. 4

EP 0 348 536 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 024 701 (INDUSTRIE-PLANUNGS-GESELLSCHAFT) * Seiten 3-5; Figures 1,2 * | 1,2,4,6 -8,10, 11,17 | B 27 C 9/04 B 27 B 31/00 |
| A | | 12 | |
| A | US-A-3 851 557 (VIERSTRAETE) * Insgesamt * | 3,13 | |
| A | AT-B- 362 129 (SCHELLING) * Seite 2, Zeilen 40-51; Figuren 1,2 * | 12 | |
| A | US-A-4 262 572 (FLODIN) * Spalte 4, Zeile 25 - Spalte 5, Zeile 9; Figuren 1,9A-H * | 14-16 | |
| A,D | DE-A-3 420 080 (FREY) * Insgesamt * | 1,14,16 | |
| A | EP-A-0 228 551 (PEDDINGHAUS) * Seite 4, Zeile 21 - Seite 6, Zeile 17; Seite 10, Zeile 32 - Seite 11, Zeile 21; Figur 1 * | 14-16 | RECHERCHIERTE SACHGEBIETE (Int. Cl.4) |
| A | WT ZEITSCHRIFT FÜR INDUSTRIELLE FERTIGUNG, Band 74, 1984, Seiten 51-52, Springer-Verlag; H. PÖTSCHKE: "Bohren, Brennschneiden und Signieren von Stahlblech auf CNC-Anlage" * Figur 1 * | 14,15 | B 27 C B 27 B B 23 Q B 23 D B 65 G |
| A | US-A-4 681 210 (MIKI) | | |

Der vorliegende Recherchenbericht wurde für alle Patentansprüche erstellt

| Recherchenort | Abschlußdatum der Recherche | Prüfer |
|---|---|---|
| DEN HAAG | 27-02-1989 | HUGGINS J.D. |